# EUROPEAN PATENT SPECIFICATION

(11) **EP 0 562 664 B1**
(45) Date of publication and mention of the grant of the patent: **25.09.1996**
(21) Application number: 93200735.4
(22) Date of filing: 12.03.1993
(51) Int. Cl.: A01D 78/10, A01B 73/02, A01B 73/06

(54) **An agricultural machine**
Landwirtschaftliche Maschine
Machine agricole

(30) Priority: 24.03.1992 NL 9200539
(43) Date of publication of application: 29.09.1993
(73) Proprietor: C. van der Lely N.V., NL-3155 PD Maasland (NL)
(72) Inventor: Van der Lely, Cornelis, CH-6300 Zug (CH)
(74) Representative: Mulder, Herman

(56) References cited:
- DE-A- 2 019 905
- DE-A- 2 851 524
- DE-U- 7 318 934
- DE-U- 8 314 582
- DE-U- 9 010 179
- FR-A- 2 306 611
- FR-A- 2 631 208
- GB-A- 1 003 366

## Description

The present invention relates to an agricultural machine having two rake wheels, which are drivable from a tractor, which rake wheels have a diameter approximately equal to the transport width of the machine and can be adjusted from the working position, whilst preserving their spatial orientation, to a transport position, in which they are located one above the other.

An agricultural machine of this type is known from DE-U-8314582. In the transport position the rake wheels in this document are hanging one above the other in an obligue position. When the rake wheels are relatively large and provided with groundwheels, this may lead to a spatially seen unfavourable and possibly unstable arrangement. The invention aims to mitigate these disadvantages.

To that end, according to the invention, the agricultural machine is characterized in that in only the transport position, one rake wheel bears on supporting means provided at the other rake wheel.

In a specific embodiment in accordance with the invention, the rake wheels are connected with the aid of a balancing and tilting construction to the frame, by means of which the machine can be coupled to the tractor.

Moving the rake wheels in a balancing and tilting construction, whilst preserving their spatial orientation, from the working position to the transport position and vice versa requires very little power and can, therefore, easily be done manually. This balancing and tilting construction, with the aid of which the two rake wheels are connected to the frame, by means of which the machine can be coupled to the tractor, may be provided with a parallelogram construction which is movable in a vertical plane extending perpendicularly to the direction of operative travel and which in the midway point is pivotably connected to the frame, a rake wheel being fitted to or near each of the lateral ends. In this situation, the parallelogram construction may be capable of such a motion that the two rake wheels, whilst preserving their spatial orientation, can be moved up and down in opposite directions. In addition, the rake wheels can each be connected via a carrier rod to the parallelogram construction, whilst the carrier rod is pivotal in an at least approximately horizontal plane relative to the parallelogram construction, more specifically in such a manner that, after first one rake wheel has moved upwards and consequently the other rake wheel has moved downwards, the two rake wheels can be moved up to each other and along each other until, seen in plan view, they are at least substantially located one above the other. One of the carrier rods may be provided with supporting plates, which are arranged such that, in the transport position, the upper rake wheel bears by means of its wheels on the supporting plates mounted on the carrier rod of the lower rake wheel. Moreover, each of the carrier rods may be provided with a locking mechanism for locking the two rake wheels in the working position and in the transport position. More specifically, the rake wheels can be locked in a plurality of working positions with the aid of the locking mechanism.

According to the invention, it becomes possible that the two rake wheels, which together have a working width of approximately seven metres, are arranged such that from the working position, whilst preserving their spatial orientation, they are movable relative to each other to a transport position having a transport width of approximately three metres.

Further features and advantages of the invention will now be described hereinafter with reference to the embodiments shown in the accompanying drawings, in which:
Figure 1 is a plan view of an agricultural machine having two tractor-drivable rake wheels in accordance with the invention, the machine being shown in a working position;
Figure 2 is a rear view of the agricultural machine shown in Figure 1, in the working position;
Figure 3 is a plan view of the agricultural machine of Figure 1, but now shown in the transport position;
Figure 4 is a rear view of the agricultural machine of Figure 1, shown in the transport position.

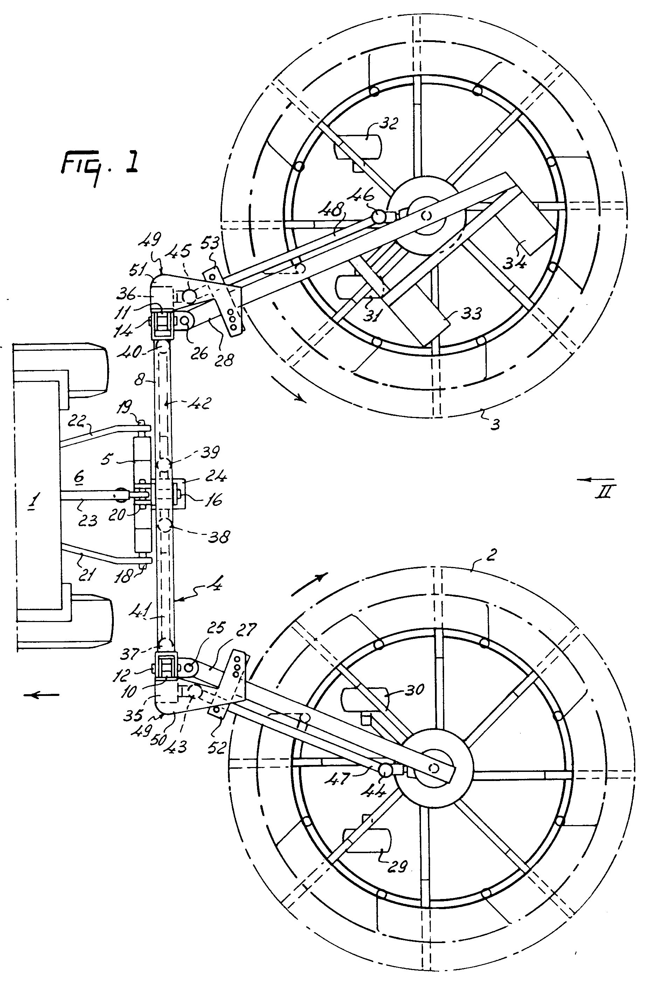

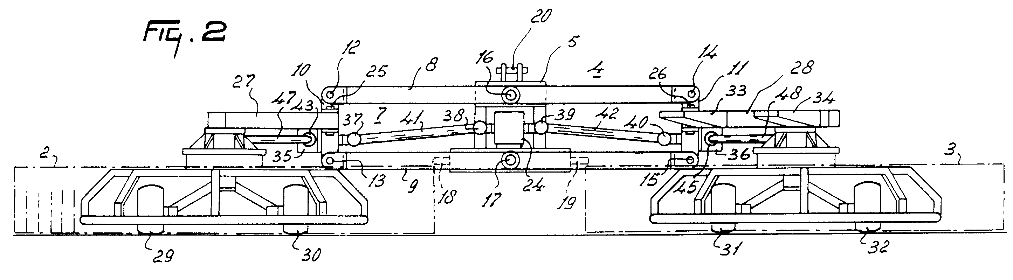

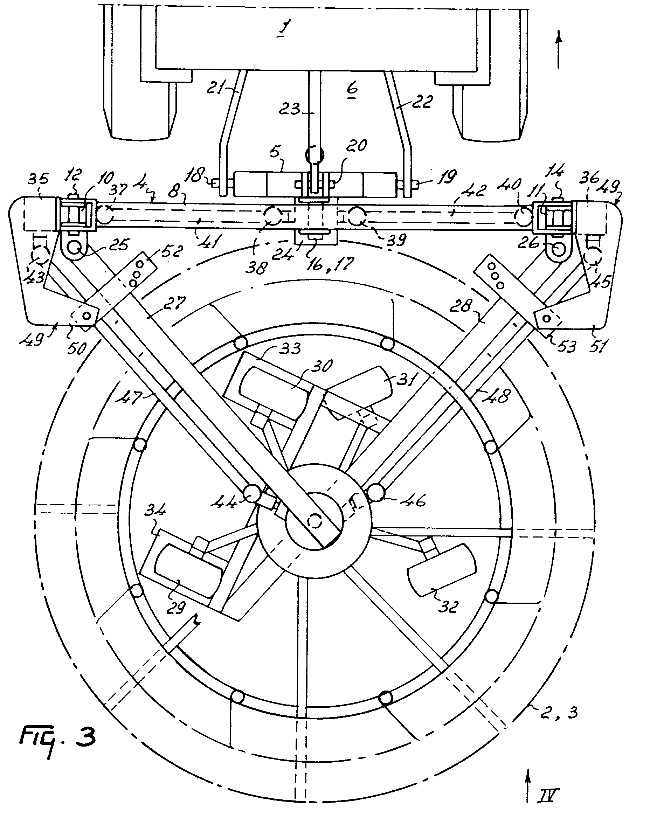

The embodiment illustrated in Figures 1 to 4 shows an agricultural machine, more specifically a hay-making machine, comprising two rake wheels 2 and 3 which are drivable by a tractor 1. The two rake wheels 2 and 3 are coupled to a balancing and tilting construction 4 which itself is coupled by means of a frame 5 to the lifting hitch 6 of the tractor 1. The balancing and tilting construction 4 comprises a parallelogram construction 7 which is movable in a vertical plane perpendicularly to the direction of operative travel and is assembled from carrier beams 8 and 9 which, in the working position of the machine, extend substantially horizontally, as well as two connecting beams 20 and 11 which are pivotably connected with the aid of pivot shafts 12 to to the ends of the carrier beams 8 and 9, more specifically in such a manner that the last said carrier beams form together with the connecting beams 10 and 11 a parallelogram which is deformable in a vertical plane extending perpendicularly to the direction of operative travel. In its midway point, more in particular in the pivot points 16 and 17 which are located one above the other, the parallelogram construction is connected to the frame 5. The frame 5 is constituted by a rectangular trestle, which at its bottom side is provided with laterally extending shaft members 18 and 19 and at its upper side is provided with a shaft member 20, the frame being couplable by means of these shaft members 18 to 20 to the lower lifting arms 21 and 22, and to the top rod 23, respectively, of the lifting hitch 6. Rigidly connected to the frame 5 is also a gear box 24, whose input shaft is connected to the power take-off shaft of the tractor 1 and whose two laterally extending output shafts are connected to the drive of the individual rake wheels 2 and 3.

At the lateral ends of the parallelogram construction, more specifically at the connecting beams 10 and 11, carrier beams 27 and 28, respectively, are pivotable about vertical pivot shafts 25 and 26 in a substantially horizontal plane. The respective rake wheels 2 and 3 are accommodated near the ends of these carrier rods 27 and 28.

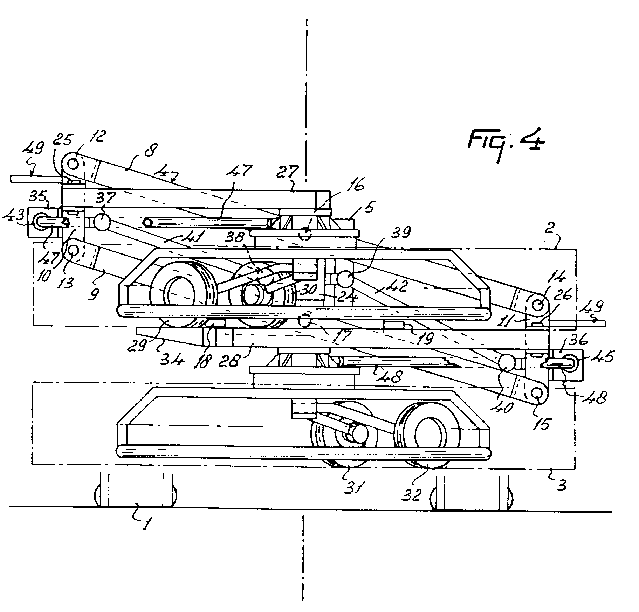

Each of the rake wheels 2 and 3 has a diameter of approximately three metres, while the working width of the machine such as it is shown in Figure 1, amounts to approximately seven metres. With the aid of the balancing and tilting construction 4, the machine can be folded such in the transport position that the transport width approximately corresponds to the diameter of a rake wheel, i.e. approximately three metres. This folding action is here effected in such a manner that the centre of gravity of the machine in both positions, i.e. both in the working position and in the transport position, is located at approximately the same distance behind the tractor. On pivoting of the rake wheels 2 and 3 from the working position to the transport position and vice versa, the spatial orientation of the rake wheels 2 and 3 remains unchanged; more in particular, the rake wheels 2 and 3 can be adjusted, whilst preserving their spatial orientation, from a working position to a transport position, in which the rake wheels are located one above the other. In the working position, the two rake wheels 2 and 3 bear on the soil by means of wheels 29, 30 and 31, 32 respectively. When the machine is to be adjusted from the working position to the transport position, the machine is first lifted with the aid of the lifting hitch 6, whereafter the balancing and tilting construction renders it possible to raise the rake wheel 2 manually in an easy manner, as a result of which the rake wheel 3 moves downwards, or to lower the rake wheel 3, as a result of which the rake wheel 2 is raised. Thereafter, it is possible in an equally easy manner to move the two rake wheels 2 and 3 manually up to each other and along each other until, seen in plan view, they are approximately located one above the other, as is shown in Figure 4. Since during this motion the connecting beams 10 and 11 preserve their substantially vertical position and the carrier rods 27 and 28 as a consequence thereof move in a substantially horizontal plane, the spatial orientation of the two rake wheels 2 and 3 remains unchanged; put differently, the rake wheels 2 and 3 have been moved parallel to each other from the working position to the transport position. Since the two rake wheels 2 and 3 are substantially straight one over the other in the transport position, the transport width is determined by the diameter of the rake wheels. In the present embodiment, the carrier rod 28 is provided with two supporting plates 33 and 34. The position of these supporting plates 33 and 34 on the carrier rod 28 is such that, after the two rake wheels 2 and 3 have been moved one above the other to the transport position, the wheels 29 and 30 of the rake wheel 2 are in a position above the respective supporting plates 33 and 34 on the carried rod of the lower rake wheel 3. By slightly moving the balancing and tilting construction 4, the upper rake wheel 2 can be moved so far downwardly that it bears by means of the wheels 29 and 30 on the supporting plates 33 and 34.

Gear boxes 35 and 36, respectively, are rigidly connected to the connecting beams 10 and 11. The input shaft of each of these gear boxes is connected with the aid of two universal joints 37, 38 and 39, 40, respectively, and a drive shaft 41 and 42, respectively, to the relevant output shaft of the gear box 24. By means of universal joints 43, 44 and 45, 46, respectively, and drive shafts 47 and 48, respectively, each of the respective rake wheels 2 and 3 is driven. The drive shafts 41 and 42 extend, in this situation, substantially parallel to the balancing and tilting construction 4, whilst the drive shafts 47 and 48 extend substantially parallel to the carrier rods 27 and 28. Since the gear boxes 35 and 36 are rigidly connected to the connecting beams 10 and 11, respectively, and the latter preserve their vertical position on pivoting from the working position to the transport position and vice versa, the spatial orientation of the gear boxes 35 and 36 is consequently also not changed, so that the drive shafts 47 and 48 pivot along together with the carrier rods 27 and 28 in a substantially horizontal plane; the drive shafts 47 and 48 will then be subjected to some change in length.

So as to enable locking of the rake wheels 2 and 3 in the working position and in the transport position, a locking mechanism 49 is provided. This locking mechanism 49 comprises, rigidly connected to the connecting beams 10 and 11, plate members 50 and 51, respectively, as well as strips 52 and 53, respectively, which are rigidly connected to each of the carrier rods 27 and 28. By means of apertures provided in the strips 52 and 53 and an aperture provided in the plate members 50 and 51 and locking pins to be inserted through these apertures, the position of the carrier rods 27 and 28 can be locked relative to the plate members 50 and 51. In the present embodiment, the strips 52 and 53 are provided with such a number of apertures and in such positions that the two rake wheels 2 and 3 can be locked in the transport position, as well as in three working positions, it being possible to set the interspaces between the rake wheels 2 and 3.

The invention is not limited to the embodiments described here with reference to the drawings, but encompasses all kinds of modifications thereof and all kinds of other possible embodiments, in sofar as they are within the scope of protection of the accompanying claims.

## Claims

1. An agricultural machine having two rake wheels (2, 3), which are drivable from a tractor (1), which rake wheels (2, 3) have a diameter approximately equal to the transport width of the machine and can be adjusted from the working position, whilst preserving their spatial orientation, to a transport position, in which they are located one above the other, characterized in that, in only the transport position, one rake wheel (2) bears on supporting means provided at the other rake wheel (3).

2. An agricultural machine as claimed in claim 1, characterized in that the rake wheels (2, 3) are connected with the aid of a balancing and tilting construction (4) to the frame (5), by means of which the machine can be coupled to the tractor (1).

3. An agricultural machine as claimed in claim 2, characterized in that the balancing and tilting construction (4) comprises a parallelogram construction (7) which is movable in a vertical plane perpendicularly to the direction of operative travel and in the midway point is pivotably connected to the frame, a rake wheel (2, 3) being attached to or near each of the lateral ends.

4. An agricultural machine as claimed in claim 3, characterized in that the parallelogram construction (7) is movable such that the two rake wheels (2, 3), whilst preserving their spatial orientation, are capable of moving up and down in opposite directions.

5. An agricultural machine as claimed in claim 4, characterized in that the rake wheels (2, 3) are each connected with the aid of a carrier rod (27, 28) to the parallelogram construction (7), the carrier rod (27, 28) being pivotal in an at least substantially horizontal plane relative to the parallelogram construction (7), more specifically in such a manner that, after first one rake wheel (2) has moved upwards and consequently the other rake wheel (3) has moved downwards, the two rake wheels (2, 3) can be moved up to each other and along each other until, seen in plan view, they are located at least substantially one above the other.

6. An agricultural machine as claimed in claim 5, characterized in that one of the carrier rods (28) is provided with supporting plates (33, 34), which are disposed such that, in the transport position, the upper rake wheel (2) bears with its wheels (29, 30) on the supporting plates (33, 34) fitted to the carrier rod (28) of the lower rake wheel (3).

7. An agricultural machine as claimed in claim 5 or 6, characterized in that each of the carrier rods (27, 28) is provided with a locking mechanism (49) for locking the two rake wheels (2, 3) in the working position and in the transport position.

8. An agricultural machine as claimed in claim 7, characterized in that the rake wheels (2, 3) can be locked in a plurality of working positions with the aid of the locking mechanism (49).

9. An agricultural machine as claimed in any one of the preceding claims, characterized in that the two rake wheels (2, 3), which together have a working width of approximately seven metres, are arranged such that from the working position they are movable, whilst preserving their spatial orientation, relative to each other to a transport position having a transport width of approximately three metres.

## Patentansprüche

1. Landwirtschaftliche Maschine mit zwei von einem Schlepper (1) anzutreibenden Rechrädern (2, 3), deren Durchmesser etwa gleich der Transportbreite der Maschine ist, und die unter Beibehaltung ihrer räumlichen Orientierung von der Arbeitslage in eine Transportlage umzustellen sind, in der sie übereinander angeordnet sind,
dadurch gekennzeichnet, daß lediglich in der Transportlage das eine Rechrad (2) auf einer Stützvorrichtung aufruht, die an dem anderen Rechrad (3) vorgesehen ist.

2. Landwirtschaftliche Maschine nach Anspruch 1,
dadurch gekennzeichnet, daß die Rechräder (2, 3) durch eine Ausgleichs- und Schwenkvorrichtung (4) mit dem Rahmen (5) verbunden sind, mittels dessen die Maschine an den Schlepper (1) anzuschließen ist.

3. Landwirtschaftliche Maschine nach Anspruch 2,
dadurch gekennzeichnet, daß die Ausgleichs- und Schwenkvorrichtung (4) eine Parallelogramm-Konstruktion (7) aufweist, die in einer senkrecht zur Arbeitsrichtung verlaufenden vertikalen Ebene bewegbar und in ihrer Mitte mit dem Rahmen schwenkbar verbunden ist, wobei an oder nahe jedem seitlichen Ende ein Rechrad (2, 3) angeordnet ist.

4. Landwirtschaftliche Maschine nach Anspruch 3,
dadurch gekennzeichnet, daß die Parallelogramm-Konstruktion (7) derart bewegbar ist, daß die beiden Rechräder (2, 3) unter Beibehaltung ihrer räumlichen Orientierung gegensinnig nach oben und unten zu bewegen sind.

5. Landwirtschaftliche Maschine nach Anspruch 4,
dadurch gekennzeichnet, daß die Rechräder (2, 3) mit der Parallelogramm-Konstruktion (7) jeweils durch eine Tragstange (27, 28) verbunden sind, die relativ zu der Parallelogramm-Konstruktion (7) in zumindest im wesentlichen horizontaler Ebene schwenkbar ist, insbesondere derart, daß nach Aufwärtsbewegung des einen Rechrades (2) mit der Folge einer Abwärtsbewegung des anderen Rechrades (3) die beiden Rechräder (2, 3) in Richtung zueinander und aneinander entlang zu bewegen sind, bis sie in Draufsicht zumindest im wesentlichen übereinander angeordnet sind.

6. Landwirtschaftliche Maschine nach Anspruch 5,
dadurch gekennzeichnet, daß eine der Tragstangen (28) Stützplatten (33, 34) aufweist, die derart angeordnet sind, daß das obere Rechrad (2) in der Transportlage mittels seiner Bodenräder (29, 30) auf den Stützplatten (33, 34) aufruht, die an der Tragstange (28) des unteren Rechrades (3) angebracht sind.

7. Landwirtschaftliche Maschine nach Anspruch 5 oder 6,
dadurch gekennzeichnet, daß jede der Tragstangen (27, 28) eine Verriegelungsmechanik (49) zum Verriegeln der beiden Rechräder (2, 3) in der Arbeitslage und in der Transportlage aufweist.

8. Landwirtschaftliche Maschine nach Anspruch 7,
dadurch gekennzeichnet, daß die Rechräder (2, 3) mittels der Verriegelungsmechanik (49) in mehreren Arbeitslagen zu verriegeln sind.

9. Landwirtschaftliche Maschine nach einem der vorhergehenden Ansprüche,
dadurch gekennzeichnet, daß die beiden Rechräder (2, 3), die zusammen eine Arbeitsbreite von etwa sieben Metern haben, derart angeordnet sind, daß sie unter Beibehaltung ihrer räumlichen Orientierung aus der Arbeitslage relativ zueinander in eine Transportlage zu bewegen sind, in der sie eine Transportbreite von etwa drei Metern haben.

## Revendications

1. Machine agricole ayant deux roues râteleuses (2, 3) pouvant être entraînées à partir d'un tracteur (1), lesquelles roues râteleuses (2, 3) ont un diamètre approximativement égal à la largeur de la machine au transport et peuvent être réglées à partir de la position de travail, tout en conservant leur orientation spatiale, jusqu'en une position de transport dans laquelle elles sont situées l'une au dessus de l'autre,
**caractérisée** en ce que, seulement dans la position de transport, une roue râteleuse (2) repose sur des moyens de support prévus sur l'autre roue râteleuse (3).

2. Machine agricole selon la revendication 1, caractérisée en ce que les roues râteleuses (2, 3) sont reliées, à l'aide d'une structure (4) d'équilibrage et de basculement, au châssis (5) au moyen duquel la machine peut être couplée au tracteur.

3. Machine agricole selon la revendication 2, caractérisée en ce que la structure (4) d'équilibrage et de basculement comprend une structure en parallélogramme (7) qui est mobile dans un plan vertical perpendiculairement au sens de marche du travail et qui est reliée, en son point milieu, de manière pivotante au châssis, une roue râteleuse (2, 3) étant attachée à chacune des extrémités latérales ou bien près de celles-ci.

4. Machine agricole selon la revendication 3, caractérisée en ce que la structure en parallélogramme (7) est mobile de telle manière que les deux roues râteleuses (2, 3) sont capables, tout en conservant leur orientation spatiale, de monter et de descendre dans des directions opposées.

5. Machine agricole selon la revendication 4, caractérisée en ce que les roues râteleuses (2, 3) sont reliées chacune, à l'aide d'une barre porteuse (27, 28), à la structure en parallélogramme (7), les barres porteuses (27, 28) étant pivotantes dans un plan au moins sensiblement horizontal par rapport à la structure en parallélogramme (7), plus spécifiquement de manière telle qu'après qu'une première roue râteleuse (2) a monté et que, par conséquent, l'autre roue râteleuse (3) a descendu, les deux roues râteleuses (2, 3) peuvent être levées, l'une jusqu'à l'autre et le long l'une de l'autre, jusqu'à ce qu'elles soient situées, en étant vues en plan, au moins sensiblement l'une au dessus de l'autre.

6. Machine agricole selon la revendication 5, caractérisée en ce qu'une des barres porteuses (28) est munie de plaques de support (33, 34) qui sont disposées de telle manière que, dans la position de transport, la roue râteleuse supérieure (2) repose par ses roues (29, 30) sur les plaques de support (33, 34) montées sur la barre porteuse (28) de la roue râteleuse inférieure (3).

7. Machine agricole selon la revendication 5 ou 6, caractérisée en ce que chacune des barres porteuses (27,28) est munie d'un mécanisme de verrouillage (49) pour verrouiller les deux roues râteleuses (2, 3) en position de travail et en position de transport.

8. Machine agricole selon la revendication 7, caractérisée en ce que les roues râteleuses (2, 3) peuvent être verrouillées en une pluralité de positions de travail, à l'aide du mécanisme de verrouillage (49).

9. Machine agricole selon l'une quelconque des revendications précédentes, caractérisée en ce que les deux roues râteleuses (2, 3) qui ont ensemble une largeur de travail d'environ sept mètres sont disposées de telle manière qu'elles sont mobiles à partir de la position de travail, tout en conservant leur orientation spatiale, l'une par rapport à l'autre, jusqu'en une position de transport ayant une largeur de transport d'environ trois mètres.
